# EUROPEAN PATENT APPLICATION

(11) **EP 3 364 510 A1**
(43) Date of publication of application: **22.08.2018**
(21) Application number: 17156168.1
(22) Date of filing: 15.02.2017
(51) Int. Cl.: H02B 1/21

(54) **A BUSBAR CONNECTION ASSEMBLY**

(71) Applicant: ABB AB, 721 83 Västerås (SE)
(72) Inventor: SÄÄW, Olle, 441 71 Sollebrunn (SE)
(74) Representative: Jin, Xiao-Hong

(57) **Abstract**

A connection assembly (10) for attaching an electrical apparatus (20) to a busbar (21) is provided. The connection assembly (10) comprises a fastening device (12) and a profile foot (15) each comprising profiled surfaces such that the fastening device (12) is interlocked in a snap fitting with the profile foot (15) when inserted in the profile foot (15). The profile foot (15) has an elongated shape so as to allow the profile foot (15) to be introduced into a groove (23) in the bus bar (21) through a slot (24) thereof with a longitudinal axis of the profile foot (15) extending along the slot (24) and thereafter be rotatable so as to come into engagement with opposite walls in the groove (23). A connector (14) is arranged between the fastening device (12) and the profile foot (15), and arranged to electrically connect the electrical apparatus (20) to the busbar (21) when the fastening device (12) and the profile foot (15) are interlocked in the snap fitting. A spring (13) is arranged between the fastening device (12) and the profile foot (15) such that the spring (13) is pre-loaded when the fastening device (12) and the profile foot (15) are interlocked in the snap fitting.

## Description

### Technical field

The technology disclosed herein relates generally to the field of electrical power distribution, and in particular to a connection assembly for attaching an electrical apparatus to a busbar.

### Background

In the field of electrical power distribution, a busbar refers to a metal strip (e.g. of copper or aluminum) that conducts electricity within switchboards, distribution boards, substations and other electrical apparatuses. The busbar is connected to the electrical apparatuses and/or to other busbars by means of bolted or clamped connections.

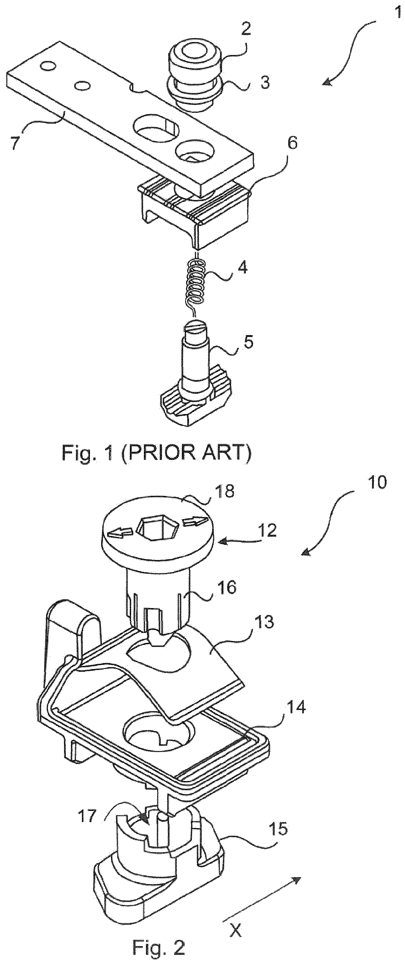

EP 2425508B1 discloses a known such connection assembly for attaching an electrical apparatus to a busbar. Figure 1 illustrates this connection assembly 1, which comprises a nut 2, a spring washer 3, a spring 4 and a profile screw 5. The connection assembly 1 is used for connecting an electrical apparatus (not shown) to a connecting bar 7 by means of a connector 6. The connection assembly 1 enables a secure connection of the electrical apparatus to the busbar.

The known connection assembly is highly reliable, but there is a need for more cost-efficient connection assemblies, in particular for applications with low or medium current.

### Summary

An objective of the present invention is to address the above described drawbacks. A particular objective is to provide a cost-efficient bus bar connection. Another particular objective is to facilitate mounting of electrical apparatuses to a busbar system. These objectives and others are achieved by the connection assembly and the busbar connection according to the appended independent claims, and by the embodiments according to the dependent claims.

The objective is according to an aspect achieved by a connection assembly for attaching an electrical apparatus to a busbar. The connection assembly comprises: a fastening device and a profile foot each comprising profiled surfaces such that the fastening device is interlocked with the profile foot in a snap fitting when inserted in the profile foot, wherein the profile foot has an elongated shape so as to allow the profile foot to be introduced into a groove in the bus bar through a slot thereof with a longitudinal axis of the profile foot extending along the slot and thereafter be rotatable so as to come into engagement with opposite walls in the groove; a connector arranged between the fastening device and the profile foot, and arranged to electrically connect the electrical apparatus to the busbar when the fastening device and the profile foot are interlocked in the snap fitting; and a spring arranged between the fastening device and the profile foot such that the spring is pre-loaded when the fastening device and the profile foot are interlocked in the snap fitting.

The connection assembly according to the invention provides a number of advantages. For instance, the connection assembly according to the invention comprises fewer components than known connection assemblies, whereby the connection assembly is less costly. Further, the fastening device and the profile foot can be manufactured in a more cost-efficient way compared to known connection assemblies for attachment to a busbar and the total cost can thereby be further reduced. Still further, the snap fitting enables a convenient and easy mounting and demounting of the electrical apparatus attached by means of the connection assembly.

The objective is according to an aspect achieved by use of a connection assembly as above, for attaching an electrical apparatus to a busbar.

The objective is according to an aspect achieved by a busbar connection comprising a connection assembly as above and a busbar, wherein the busbar has a longitudinal groove with a slot arranged to receive the connection assembly, the slot having a smaller width than the inner width of the groove.

Further features and advantages of the embodiments of the present invention will become clear upon reading the following description and the accompanying drawings.

### Brief description of the drawings

Figure 1 illustrates a known connection assembly.
Figure 2 illustrates in an exploded view an embodiment of a connection assembly according to the invention.
Figure 3 illustrates the connection assembly according to the invention when sub-asembled.
Figures 4a and 4b illustrate mounting of the connection assembly to a busbar system.
Figures 5a and 5b illustrate mounting and dismounting features of the connection assembly according to the invention.

### Detailed description

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

Figure 2 illustrates in an exploded view an embodiment of a connection assembly according to the invention. The connection assembly 10 comprises a fastening device 12, a spring 13 (in the following exemplified by a leaf spring 13), a profile foot 15 and a connector 14.

The fastening device 12 may, for instance, be a type of screw or bolt with a snap fastening function for swift and uncomplicated fastening to the profile foot 15. The profile foot 15 and the fastening device 12 thus each comprise one part of an interlocking means for enabling the snap fastening function. As a particular example, the fastening device 12 may comprise a bolt with a shaft provided with grooves, wherein the grooves act as interlocking means fitting into corresponding protruding rim as interlocking means of the profile foot 15. In the figure, the snap fastening function is shown to be implemented by the fastening device 12, i.e. the "screw", and the profile foot 15 both having been shaped such as to be mechanically interlocked when the screw 12 is inserted into a hollow interior of the receiving profile foot 15. The fastening device 12 may, for instance, be provided with a number of grooves along its outer circumference while the profile foot 15 has rims.

From the above and figure 2 it is clear that the fastening device 12 is formed so as to snap into the profile foot 15. In an embodiment, the fastening device 12 comprises a screw or a bolt, comprising recesses or cut-outs that cooperate with the cut-outs or recesses in the profile foot 15. In this manner, the fastening device 12 is snapped into the profile foot 15; the recesses or cut-outs of the fastening device 12 are aligned with the cap cut-outs or recesses of the profile foot 15 securing them mutually in a mechanically interlocked position. It is noted that cut-outs can be formed in one or both of the profile foot 15 and the fastening device 12.

The fastening device 12 and the profile foot 15 can both be made e.g. of plastics, and can thereby be manufactured in a cost-efficient way. By manufacturing these parts in plastics, the material costs as well as the manufacturing costs are reduced compared to the conventional metallic parts, and the total cost of the connection assembly 10 can thereby be reduced.

Figure 2 also shows a connector 14 made of a metal such as cupper, brass or aluminum. The connector 14 may be designed differently depending on the electrical apparatus to which it is to be connected. The connector 14 is made of an electrically conducting material, e.g. a metal such as cupper, brass or aluminum and provides an electrical connection connecting the electrical apparatus that is to be attached by means of the connection assembly 10 to a busbar.

The leaf spring 13 can be made of a spring-steel and comprises an opening through which the fastening device 12 fits. The leaf spring 13 may be a flat, rectangular piece of spring steel through which a hole is punched (the hole being sized such as to allow the fastening device 12 to be entered through). The size of the leaf spring 13 is such that it, when in its unbiased position (rest position), fits into a receiving part of the connector 15. In the illustrated case, the receiving part of the connector 15 is a flat framed surface with a hole punched through for enabling the fastening device 12 to enter through the leaf spring 13 and also through the connector 14. In figure 2, the spring leaf 13 is shown in its rest position, and when the connection assembly 10 is mounted in use, the spring leaf 13 is biased (i.e. pre-loaded) and fits into the receiving part of the connector 15, which, as mentioned, may have a surrounding protruding frame sized such that the spring leaf 13 fits into it when pre-loaded.

As the leaf spring 13 is pre-loaded in the interlocked position of the fastening device 12 and the profile foot 15, the connection assembly 10 can be easily released when demounting the electrical apparatus from the busbar. When releasing the fastening device 12, the pre-loaded leaf spring 13 forces it out of its snap fitting with the profile foot 15, which gives the convenient release.

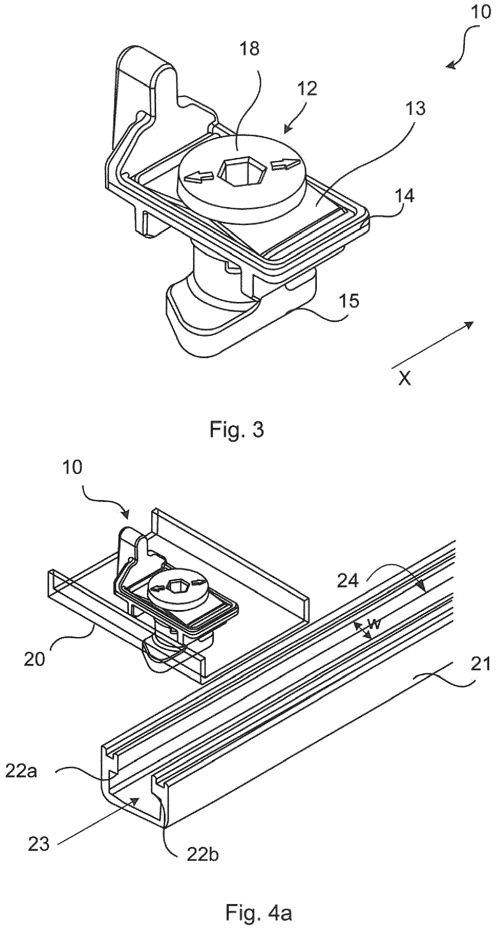

Figure 3 illustrates the connection assembly 10 according to the invention when sub-assembled. The fastening device 12 may comprise any drive design for driving it in to its interlocked position and for extracting it to the dismounted position. For example, the fastening device 12 may comprise shaft with a head 18, the head 18 comprising a hexagonal socket (as illustrated). A hex key (also denoted Allen key) may hence be used to drive the fastening device 12 to its mounted position interlocked with the profile foot 15. An advantage of manufacturing the fastening device 12 in a plastic material and providing a head thereof with a hexagonal socket grip, is that it can be mounted with an uninsulated Allen key. This gives a fast and safe mounting in field, and there is no need of torque wrench in field.

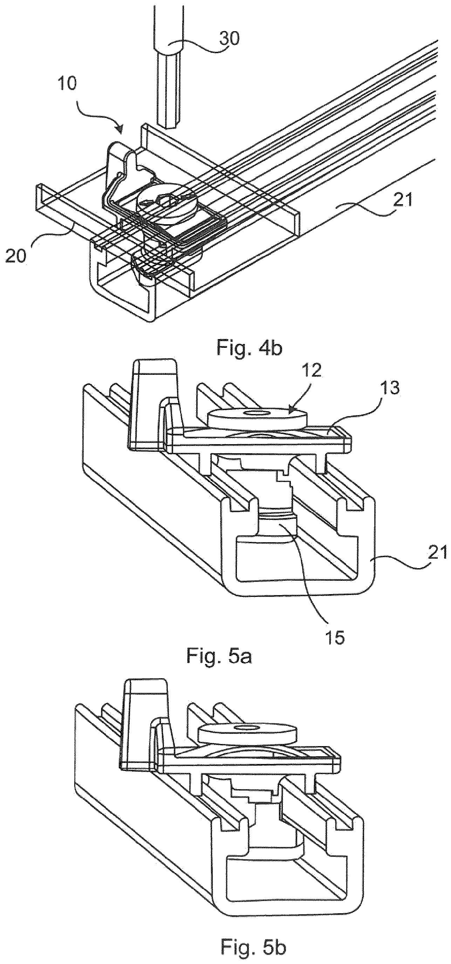

Figures 4a and 4b illustrate mounting of the connection assembly to a busbar system. A busbar 21 comprises a groove 23 accessible via a slot 24 of width w. The profile foot 15 has a shape allowing it to be introduced into the groove 23 in the bus bar 21 through the slot 24 thereof with a longitudinal axis (indicated as x-axis in figure 4a and 3) of the profile foot 15 extending along the slot 24. The profile foot 15 is rotatable (e.g. about 30 degrees) in the slot 24 so as to come into engagement with opposite walls in the groove 23 and under contact flanges 22a, 22b of the busbar 21. The profile foot 15 may, for instance, have essentially the shape of a parallelogram, wherein two of its four sides may be parallel and of a width such as to fit into the groove of the busbar 21. The other two sides of the profile foot 15 may be designed such that when mounting the connection assembly 10 to the busbar 21, these two sides enables the profile foot 15 to be secured in the groove 23 under the contact flanges 22a, 22b.

Electrical connection between the busbar 21 and the electrical apparatus 20 is provided by the contact flanges 22a, 22b of the busbar 21 and contact members of the electrical apparatus 20. The contact flanges 22a, 22b are typically integrated parts of the busbar 21 and also define the slot 24 for entering the groove 23 of the busbar 21. When an electrical apparatus 20 is attached to the busbar 21 these contact members are pressed against the outer sides of the contact flanges 22a, 22b of the busbar 21 with a predetermined force. The connection assembly 10 provides this force by having the profile foot 15 abutting the inner sides of the contact flanges 22a, 22b, and parts in contact with the contact members, so as to press the contact flanges 22a, 22b and the contact members towards each other when the connection assembly 10 is tightened during mounting.

Figure 4b illustrates the connection assembly 10 when attaching the electrical device 20 (only schematically shown) to the busbar 21. The electrical device 20 may, for instance, be a fuse box or a busbar. The connection assembly 10 is thus used for mounting the electrical device 20 to the busbar 21. When securing the electrical device 20 to the busbar 21 the fastening device 12 of the connection assembly 10 is driven in, e.g. screwed in by means of an Allen key 30 if provided with a hexagonal socket.

Figures 5a and 5b illustrate mounting and dismounting features of the connection assembly according to the invention. In figure 5a, the profile foot 15 has been entered through the slot 24 of the busbar 21, and in figure 5b, the profile foot 15 has been rotated so as to come into engagement with opposite walls in the groove 23.

The earlier described interlocking, i.e. snap fitting, between the fastening device 12 and the profile foot 15 has, according to embodiments of the invention, an additional feature. When driving the fastening device 12 into the snap fitting with the profile foot 15, a sound, a "click", can be heard. The installer can thereby be ensured that the profile foot 15 has been rotated so as to come into engagement with opposite walls in the groove 23, i.e. firmly secured to the busbar 21.

The various features and embodiments that have been described can be combined in many different ways, examples of which are given in the following.

A connection assembly 10 is provided for attaching an electrical apparatus 20, such as a switchboard, distribution board, substation, busbar and other electrical apparatuses to a busbar 21.

The connection assembly 10 comprises a fastening device 12 and a profile foot 15 each comprising profiled surfaces such that the fastening device 12 is interlocked in a snap fitting with the profile foot 15 when inserted in the profile foot 15. The profile foot 15 has an elongated shape so as to allow the profile foot 15 to be introduced into a groove 23 in the bus bar 21 through a slot 24 with a longitudinal axis of the profile foot 15 extending along the slot 24 and thereafter be rotatable so as to come into engagement with opposite walls in the groove 23.

The connection assembly 10 comprises a connector 14 arranged between the fastening device 12 and the profile foot 15, and arranged to electrically connect the electrical apparatus 20 to the busbar 21 when the fastening device 12 and the profile foot 15 are interlocked in the snap fitting. The connector 14 may, as has been described, comprise a metal piece with a through hole, through which hole the fastening device 12 is inserted in the profile foot 15. Thereby the connector 14 is firmly held between the fastening device 12 and the profile foot 15 when they are in the interlocking snap fitting.

The connection assembly 10 comprises a leaf spring 13 arranged between the fastening device 12 and the profile foot 15 such that the leaf spring 13 is pre-loaded when the fastening device 12 and the profile foot 15 are interlocked in the snap fitting. As described earlier, the leaf spring 13 provides a convenient way to enable mounting and dismounting of the electrical apparatus 20 to/from the busbar 21.

In some embodiments, the snap fitting provides a sound (a "click") when coming to the interlocked position, wherein the interlocked position is when the profile foot 15 is rotated so as to come into engagement with opposite walls in the groove 23.

In various embodiments, the fastening device 12 comprises a shaft 16 having the profiled surface, and the profile foot 15 comprises a recess 17 having the profiled surface. The profiled surface of the profile foot recess 17 is arranged to receive the profiled surface of the shaft 16 thus providing the interlocking snap fitting.

In various embodiments, the fastening device 12 comprises a shaft 16 with a head 18 (e.g. a bolt or a screw) with a hexagonal socket for receiving a hex key. This embodiment allows the fastening device 12 to be easily driven to its interlocked snap fitting by means of the hex key.

In various embodiments, the fastening device 12 comprises a shaft 16 entered through a respective through hole of the connector 14 and the spring 13. The connector 14 and the spring 13 can thereby be securely arranged between the fastening device 12 and the profile foot 15 when the latter are interlocked in the snap fitting.

In various embodiments, the spring 13 is a leaf spring. The leaf spring 13 can be manufactured in a cost-efficient way, e.g. in a punching process and thereby entails lower costs than e.g. a spiral spring of known connection assemblies.

In various embodiments, the fastening device 12 and the profile foot 15 are made of plastics. Again, the cost of the connection assembly can be kept down by a cost-efficient manufacturing process, enabled by the fastening device 12 and the profile foot 15 being made of plastics. The connection assembly according to this embodiment cannot be exposed for as high contact pressure as e.g. the earlier described known connection assembly, and is thereby suitable for low to medium current applications rather than high current applications.

The invention has mainly been described herein with reference to a few embodiments. However, as is appreciated by a person skilled in the art, other embodiments than the particular ones disclosed herein are equally possible within the scope of the invention, as defined by the appended patent claims.

## Claims

1. A connection assembly (10) for attaching an electrical apparatus (20) to a busbar (21), the connection assembly (10) comprising:
- a fastening device (12) and a profile foot (15) each comprising profiled surfaces such that the fastening device (12) is interlocked in a snap fitting with the profile foot (15) when inserted in the profile foot (15), wherein the profile foot (15) has an elongated shape so as to allow the profile foot (15) to be introduced into a groove (23) in the bus bar (21) through a slot (24) thereof with a longitudinal axis of the profile foot (15) extending along the slot (24) and thereafter be rotatable so as to come into engagement with opposite walls in the groove (23),
- a connector (14) arranged between the fastening device (12) and the profile foot (15), and arranged to electrically connect the electrical apparatus (20) to the busbar (21) when the fastening device (12) and the profile foot (15) are interlocked in the snap fitting, and
- a spring (13) arranged between the fastening device (12) and the profile foot (15) such that the spring (13) is pre-loaded when the fastening device (12) and the profile foot (15) are interlocked in the snap fitting.

2. The connection assembly (10) as claimed in claim 1, wherein the snap fitting provides a sound when coming to the interlocked position, the interlocked position comprising the profile foot (15) being rotated so as to come into engagement with the opposite walls in the groove (23).

3. The connection assembly (10) as claimed in claim 1 or 2, wherein the fastening device (12) comprises a shaft (16) having the profiled surface, and the profile foot (15) comprises a recess (17) having the profiled surface, wherein the profiled surface of the profile foot recess (17) is arranged to receive the profiled surface of the shaft (16) thus providing the interlocking snap fitting.

4. The connection assembly (10) as claimed in any of the preceding claims, wherein the fastening device (12) comprises a shaft (16) with a head (18) with a hexagonal socket for receiving a hex key.

5. The connection assembly (10) as claimed in any of the preceding claims, wherein the fastening device (12) comprises a shaft (16) entered through a respective through hole of the connector (14) and the spring (13), whereby the connector (14) and the spring (13) are arranged between the fastening device (12) and the profile foot (15) when interlocked in the snap fitting.

6. The connection assembly (10) as claimed in any of the preceding claims, wherein the spring (13) is a leaf spring.

7. The connection assembly (10) as claimed in any of the preceding claims, wherein the fastening device (12) and the profile foot (15) are made of plastics.

8. Use of a connection assembly (10) according to any of claims 1-7, for attaching an electrical apparatus (20) to a busbar (21).

9. A busbar connection comprising a connection assembly (5) and a busbar (21), wherein the busbar (21) has a longitudinal groove (23) with a slot (24) arranged to receive the connection assembly (10), the slot (24) having a smaller width than the inner width of the groove (10), **characterized by** the connection assembly (10) being a connection assembly (10) according to any of claims 1-7.
